**Europäisches Patentamt**

**European Patent Office**

**Office européen des brevets**

(11) Veröffentlichungsnummer: **0 225 466 B1**

# EUROPÄISCHE PATENTSCHRIFT

(45) Veröffentlichungstag der Patentschrift:
27.06.90

(51) Int. Cl.⁵: **H02J 9/06, G06F 1/00**

(21) Anmeldenummer: **86114994.6**

(22) Anmeldetag: **28.10.86**

(54) **Batteriebetriebenes elektronisches Gerät.**

(30) Priorität: **11.11.85 DE 3539929**

(43) Veröffentlichungstag der Anmeldung:
**16.06.87 Patentblatt 87/25**

(45) Bekanntmachung des Hinweises auf die Patenterteilung:
**27.06.90 Patentblatt 90/26**

(84) Benannte Vertragsstaaten:
**CH DE FR GB IT LI NL SE**

(56) Entgegenhaltungen:
**DE-A- 2 825 379**
**FR-A- 1 367 808**
**US-A- 3 982 141**

(73) Patentinhaber: **Siemens Aktiengesellschaft,
Wittelsbacherplatz 2, D-8000 München 2(DE)**

(72) Erfinder: **Stark, Reinhard, Dipl.-Ing.(FH),
Wodanstrasse 20, D-8500 Nürnberg(DE)**

## Beschreibung

Die Erfindung betrifft ein batteriebetriebenes elektronisches Gerät mit Kondensatorpufferung der Versorgungsspannung während eines Batteriewechsels.

Bei vielen elektronischen Geräten werden Daten in flüchtigen Speichern abgespeichert, die batteriegepuffert sind. Da diese Daten bei einem Batteriewechsel im allgemeinen nicht verloren gehen dürfen, wird die Versorgungsspannung mit einem Kondensator großer Kapazität gepuffert. In vielen Fällen werden über die Batterie auch Geräteteile versorgt, deren Funktion während eines Batteriewechsels nicht unbedingt sichergestellt sein muß. Solche Geräteteile weisen oft eine Stromaufnahme auf, die im Vergleich zu reinen Speichern verhältnismäßig hoch ist. Damit wird eine Kondensatorpufferung oftmals praktisch unmöglich oder aber wegen des großen erforderlichen Kondensators sehr aufwendig. Beispielsweise verbrauchen batteriebetriebene Meßgeräte während einer Messung kurzzeitig höhere Ströme. Es ist nicht auszuschließen, daß Batteriewechsel und Messung zeitlich zusammentreffen, sodaß die Kondensatorpufferung zur Sicherstellung der Speicherfunktionen auf den hohen Strombedarf während der Messung ausgelegt sein müßte. Andererseits ist aber im allgemeinen die Meßbereitschaft während eines Batteriewechsels nicht erforderlich.

Aus der DE-A-2 825 379 ist eine Lösung bekannt geworden, ein Speicherelement über einen eigenen Anschluß zu versorgen, dem ein Pufferkondensator parallelgeschaltet ist. Die restlichen Schaltkreise, deren Funktion während einer Unterbrechung des Batterieausgangs nicht unbedingt sichergestellt sein muß, werden von einem Ausgang eines Konstantspannungsschaltkreises mit Spannung versorgt. Damit keine Ladungen von dem Pufferkondensator in die anderen Schaltkreise abfließen können, sind zwei Dioden so angeordnet, daß das Laden des Kondensators von der Batterie oder dem Konstantspannungsschaltkreis ermöglicht wird, jedoch bei Ausfall einer dieser Quellen ein Entladen des Kondensators verhindert wird.

Aufgabe der Erfindung ist es daher, ein Gerät der eingangs genannten Art so auszuführen, daß eine solche Kondensatorpufferung ohne großen Aufwand, insbesondere während eines Batteriewechsels, durchgeführt werden kann.

Diese Aufgabe wird erfindungsgemäß durch die kennzeichnenden Merkmale des Patentanspruchs 1 gelöst. Eine vorteilhafte Weiterbildung ist durch den Patentanspruch 2 gekennzeichnet.

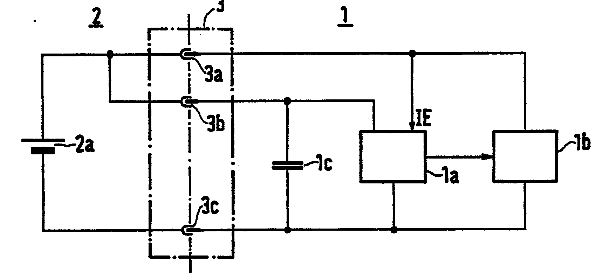

Ein Ausführungsbeispiel der Erfindung wird nachfolgend anhand der Figur näher erläutert.

Ein elektronisches Gerät 1 wird von einer Batterie 2a versorgt. Die Batterie 2a ist auf einer Baueinheit 2 untergebracht und mit dem Gerät 1 über eine Steckverbindung 3 elektrisch verbunden. Zum Auswechseln der Batterie 2a wird die Steckverbindung 3 gelöst und die Baueinheit 2 entnommen. Die Spannungsversorgung des Geräts 1 ist in zwei Teile aufgeteilt. Ein erster Geräteteil 1a enthält Funktionselemente, zum Beispiel Speicher, die auch während des Batteriewechsels mit Spannung versorgt werden müssen. Der Geräteteil 1b enthält Funktionselemente, die während des Batteriewechsels nicht betriebsbereit sein müssen. Der Geräteteil 1a ist mit den Polen 3b und 3c der Steckverbindung, der Geräteteil 1b mit den Polen 3a und 3c der Steckverbindung 3 verbunden. Die Versorgungsspannungsanschlüsse des Geräteteils 1a sind mit einem Pufferkondensator 1c überbrückt.

Die Steckerpole 3a und 3b sind batterieseitig mit einer Kurzschlußbrücke überbrückt. Bei eingeschobener Baueinheit 2 und geschlossener Steckverbindung 3 werden damit beide Geräteteile 1a und 1b von der Batterie 2a versorgt. Wird jedoch die Baueinheit 2 entfernt, d.h. die Steckverbindung 3 gelöst, so sind die beiden Steckerpole 3a und 3b elektrisch voneinander getrennt und nur der Geräteteil 1a wird über den Kondensator 1c weiter mit Spannung versorgt. Da der Kondensator 1c während des Batteriewechsels nur die Spannungsversorgung der unbedingt notwendigen Funktionselemente übernimmt, kann er verhältnismäßig klein gehalten werden. Im allgemeinen werden nämlich dem Geräteteil 1a nur Speicherfunktionen mit relativ geringer Stromaufnahme zugeordnet sein. Funktionselemente mit höherer Stromaufnahme, die zum Beispiel Lastströme für eine Ansteuerung liefern müssen, können im allgemeinen dem Geräteteil 1b zugeordnet werden.

Bei der dargestellten Ausführungsform ist der Steckerpol 3a außerdem mit einem Eingang IE des Geräteteils 1a verbunden. Über diesen Eingang erfolgt keine Spannungsversorung, sondern lediglich eine Steuerfunktion. Beispielsweise kann damit ein Interrupteingang eines im Geräteteil 1a enthaltenen Mikrocomputers so angesteuert werden, daß bei einem Ausfall der Versorgungsspannung für den Geräteteil 1b durch Lösen der Steckverbindung 3 der Mikrocomputer in einen definierten Zustand gebracht wird, bei dem keine Steuerströme an den Geräteteil 1b abgegeben werden.

Um Fehlfunktionen zu vermeiden ist es im allgemeinen erwünscht, daß der Geräteteil 1b vor dem Geräteteil 1a von der Spannungsversorgung getrennt wird. Dies kann man zum Beispiel erreichen, wenn man den Steckerpol 3a mit einem kürzeren Stift ausführt als die übrigen Steckerstifte.

## Patentansprüche

1) Batteriebetriebenes elektronisches Gerät (1) mit Kondensatorpufferung der Versorgungsspannung während eines Batteriewechsels,
**gekennzeichnet durch**
folgende Merkmale:

a) die Batterie (2a) ist auf einer auswechselbaren Baueinheit (2) mit einer dreipoligen Steckverbindung (3) angeordnet,

b) die Batterie (2a) ist zwischen dem ersten (3a) und dem dritten Pol (3c) der Steckverbindung (3) angeschlossen,

c) zwischen dem batterieseitigen ersten und zweiten Pol (3a, 3b) ist eine Kurzschlußbrücke vorgesehen,

d) an dem zweiten (3b) und dem dritten (3c) geräteseitigen Pol der Steckverbindung (3) sind ein

Pufferkondensator (1c) und die Geräteteile (1a) angeschlossen, deren Funktion während des Batteriewechsels gewährleistet sein muß,

e) an den ersten (3a) und den dritten (3c) geräteseitigen Pol der Steckverbindung (3) sind alle übrigen Geräteteile (1b) angeschlossen.

2) Elektronisches Gerät nach Anspruch 1, **dadurch gekennzeichnet,** daß ein dem ersten Pol (3a) der Steckverbindung (3) zugeordneter Stift kürzer ausgeführt ist als die den übrigen Polen (3b, 3c) zugeordneten Stifte, so daß beim Lösen der Steckverbindung (3) der erste Pol (3a) vor den beiden anderen getrennt wird.

## Claims

1. A battery-operated electronic device (1) having capacitor back-up of the supply voltage during a battery exchange, characterised by the following features:

   a) the battery (2a) is arranged on an exchangeable constructional unit (2) having a three pole plug and socket connector (3),

   b) the battery (2a) is connected between the first (3a) and the third (3c) poles of the plug and socket connector (3),

   c) a short-circuiting link is provided between the first and second poles (3a, 3b) on the battery side,

   d) connected to the second (3b) and to the third (3c) poles of the plug and socket connector (3) on the device side are a capacitor back-up unit (1c) and the parts (1a) of the device, the operation of which must be ensured during the battery exchange,

   e) all of the remaining parts (1b) of the device are connected to the first (3a) and the third (3c) poles of the plug and socket connector (3) on the device side.

2. An electronic device according to claim 1, characterised in that a pin associated with the first pole (3a), of the plug and socket connector (3) is shorter than the pins associated with the remaining poles (3b, 3c), so that when disconnecting the plug and socket connector (3) the first pole (3a) is separated before the other two.

## Revendications

1. Appareil électronique (1) alimenté sur pile et dont la tension d'alimentation est tamponnée par un condensateur pendant le remplacement de la pile, caractérisé par les caractéristiques suivantes:

   a) la pile (2a) est disposée dans un module interchangeable (2) comportant un connecteur tripolaire (3),

   b) la pile (2a) est branchée entre le premier pôle (3a) et le troisième pôle (3c) du connecteur (3),

   c) un pont de court-circuit prévu entre les premier et second pôles (3a, 3b), prévus côté pile,

   d) un condensateur tampon (1c) et les parties (1a) de l'appareil, dont le fonctionnement doit être garanti pendant le remplacement de la pile, sont raccordés au second pôle (3b) et au troisième pôle (3c), prévus du côté de l'appareil, du connecteur (3),

   e) toutes les autres parties (1b) de l'appareil sont raccordées au premier pôle (3a) et au troisième pôle (3c), qui sont prévus du côté de l'appareil, du connecteur (3).

2. Appareil électronique suivant la revendication 1, caractérisé par le fait qu'une broche associée au premier pôle (3a) du connecteur (3) est plus courte que les broches associées aux autres pôles (3b, 3c), de sorte que lors du détachement du connecteur (3), le premier pôle (3a) est déconnecté avant les deux autres.